(19) Europäisches Patentamt
European Patent Office
Office européen des brevets

(11) Publication number: **0 351 201 A2**

# (12) EUROPEAN PATENT APPLICATION

(21) Application number: **89307059.9**

(22) Date of filing: **12.07.89**

(51) Int. Cl.$^5$: **D 02 G 3/04**

(30) Priority: **13.07.88 US 218401**

(43) Date of publication of application:
**17.01.90 Bulletin 90/03**

(84) Designated Contracting States:
**BE DE FR GB IT NL**

(71) Applicant: **HOECHST CELANESE CORPORATION**
**Route 202-206 North**
**Somerville, N.J. 08876 (US)**

(72) Inventor: **Ying, Edwina**
**266 Holland Court**
**Bridgewater New Jersey (US)**

(74) Representative: **De Minvielle-Devaux, Ian Benedict Peter *et al***
**CARPMAELS & RANSFORD 43, Bloomsbury Square**
**London WC1A 2RA (GB)**

## (54) Non-shrinkable hybrid yarn.

(57) The instant invention involves a non-shrinkable, fibrous tow which may be formed into polymeric plastic composites. The tow is prepared by a process comprising the steps of: (a) combining reinforcing fibers and thermoplastic polymeric fibers to form a continuous tow; (b) spraying the tow with a coating solution; (c) heating the sprayed tow; (d) passing the tow through a bath to insure a uniform coating on the tow; (e) heating the tow; and (f) collecting the uniformly coated, non-shrinkable tow.

EP 0 351 201 A2

## Description

# NON-SHRINKABLE HYBRID YARN

(d) Background of Invention

1. Field of Invention

This invention relates to processes for preparing fibers useful in forming composite articles. More particularly, this invention relates to non-shrinkable, reinforcing fiber-containing, fiber blends which are useful in preparing composite articles.

2. Prior Art

Carbon fiber-containing tapes and rovings and fiber-reinforced products have been known for several years. See, for example, U.S. Patent Nos. 3,914,499, 3,969,171, 4,214,931, 4,341,835, 3,704,485, 3,873,389, 3,795,944, 3,993,726 and 3,728,424.

Also it is known to combine two similar or different types of fibers, particularly to obtain high bulk yarn. See for example, U.S. Patent Nos. 4,219,997, 4,218,869, 3,959,962, 3,968,638, 3,958,310, 3,252,484 and 3,175,351. The combining of different types of fibers has been facilitated using various types of fluid jets. See, e.g., the '310 patent and U.S. Patent Nos. 4,147,020 and 4,343,146. However, in the '020 patent, after being combined, the yarns are cut into short lengths. In the '146 patent, the filaments are randomly entangled and there is no assurance that the fibers are substantially parallel after intermingling.

German Patent application P 33,412,928 discloses a process for producing fiber-reinforced molded articles from blends of thermoplastic and reinforcing fibers. It discloses tows containing thermoplastic and reinforcing fibers allegedly lying essentially parallel to one another. However, it does not clearly disclose how to prepare these tows. The patent also states that a size may be applied to the tow. However, no specific processing conditions for applying the size are provided, and there is no disclosure that a bath must be employed in addition to spraying to coat a fiber tow uniformly.

British patent 1,200,342 relates to a process for the production of reinforced, synthetic thermoplastic materials. Two fibrous materials, one of which can be a thermoplastic fiber and the other a reinforcing fiber, are mixed and then heated and compressed to produce a reinforced product. The required degree of mixing can be obtained by blending the fibers by known techniques in the textile and paper making industries, such as carding. However, the patent does not teach that fibers may be coated.

U.S. Patent No. 3,358,436 discloses a process for spreading and mixing yarns of continous filaments, particularly non-conductive yarns. The process involves applying an electrically conductive liquid to the filaments to make the filaments electrically conductive and then applying an electric current of at least 5000 volts to spread the filaments prior to mixing them. The patent, however, does not disclose that the mixed yarns can be sprayed with a size and passed through a bath.

U.S. Patent No. 4,539,249 discloses that thermoplastic and carbon fibers can be combined into a yarn, woven into a fabric, and heated under pressure to form a laminate. However, a coating is not applied to the fibers.

Research Disclosure 20239 of February 1981 states that woven fabrics made from glass or carbon fibers with thermoplastic fibers can be used to form reinforced composites. However, the disclosure does not reveal how to prepare an intermixed tow of carbon and thermoplastic fibers nor the application of a coating to the tow.

European Patent Application No. 033,244 discloses a method for preparing reinforcing fiber reinforced materials. In one embodiment, thermoplastic and carbon fibers are fed from spools into a device in which the fibers are aligned with one another and then heated to a temperature at which the thermoplastic material softens and causes the fibers to adhere to one another to form a fiber tow. Optionally, the fibers leaving the device may be coated with a thermoplastic material by employing an extrusion press or a bath of molten thermoplastic material through which the fibers are drawn. The patent teaches that the thermoplastic material is applied directly to the fibers without the use of solvents, but it does not provide any limits on the amount of coating to be applied. Such melt coated fiber yarns are stiffer than solution coated yarns. Furthermore, it does not disclose that the fibers must be both sprayed and passed through a bath.

An article entitled "Solventless Fabrication of Reinforced Composites" in the NASA Tech Brief from the fall of 1982 discloses a composite allegedly made by intimately intermixing thermoplastic and reinforcing fibers and then applying heat and pressure to the fibers. However, it does not disclose a method for making a fiber tow nor the application of a coating to a tow.

German Patent No. 2,204,119 purportedly discloses a process for manufacturing a yarn bundle containing thermoplastic material. In the patent, thermoplastic and "structure-forming" strands, such as boron fibers, are combined and then heated to melt the thermoplastic strands. When the thermoplastic strands melt, they bind the structure-forming strands together. The patent does not clearly describe the process used to combine the fibers and does not disclose the application of a coating to the combined fibers.

U.S. Patent No. 4,226,079 discloses the combining of two different types of fibers in order to produce a bulk yarn. The fibers are entangled in a jet intermixing zone. However, the fibers disclosed in the patent are

polyester and polyamide and no coating is applied to the fibers.

U.S. Patent No. 3,175,351 discloses a method of bulking continuous filament yarns. In addition, it discloses that yarns of different compositions may be combined and alleges that the yarns are in a substantially parallel relationship. However, none of the compositions is a reinforcing fiber and no coating is applied.

U.S. Patent No. 4,479,999 discloses an improved woven fabric comprised of fusible and infusible fibers wherein the infusible fibers include graphite or carbon fibers, and the fusible fibers are thermoplastic in nature. According to the patent, fusible and infusible fibers are woven into a fabric and thermally bonded together by heating above the melting point of the fusible fiber. This patent, however, does not disclose the preparation of linearly intermixed fiber tow products nor that such products are useful in forming composite articles. The patent also does not disclose the preparation of such materials using a gas jet intermixing means nor the application of a coating.

U.S. Patent No. 4,457,345 discloses a yarn prepared from a mixture of textile and carbon fibers. Both the textile and carbon fibers are chopped before being mixed to form the yarn. This patent does not disclose the formation of a non-shrinkable hybrid yarn from continuous thermoplastic and continuous carbon fibers nor a coated hybrid yarn in which the fibers are substantially parallel to one another.

Japanese Patent JA 51-10871 discloses reinforced plastics containing fiber-like reinforcing materials, such as glass fibers, to make felt-like sheets from a mixture of thermoplastic fibers and reinforcing materials. Chopped reinforcing fibers, which are one inch or less in length, are mixed with the thermoplastic fibers and formed into a web or felt-like sheet. Since chopped fibers are used, there will be a random distribution of the thermoplastic and the reinforcing fibers in the JA 51-10871 felt-like sheets and they will not be substantially parallel to one another.

In Japanese Patent No. 48-3536, gas, traveling at a high velocity in the same direction as the fibers, is used to vibrate the fibers before they are sprayed with a resin. This patent does not disclose passing the fibers through a bath after the yarn has been sprayed with the resin nor forming a tow in which reinforcing and thermoplastic fibers are substantially parallel.

In U.S. Patent No. 3,873,389, carbon fibers in a carbon fiber tow are spread by using air that flows in a direction opposite to the direction the carbon fibers are moving. After the fibers are spread, they are impregnated with a resin by passing the carbon fibers through a bath or tank containing the resin to form a tape. However, the patent does not disclose the intermixing of continuous carbon and thermoplastic fibers, the spraying of an intermixed yarn with a coating, nor the formation of a tow in which the fibers are substantially parallel.

U.S. Patent No. 3,380,131 discloses a process and apparatus for the production of a drawn tow whereby the polyester filaments that comprise the tow are intermingled by using a deflecting surface. The deflecting surface is a freely rotating roll with inwardly sloping sides. As the filaments touch the sides of the deflecting surface, they are forced together and thereby intermingle because of the inwardly sloping sides. However, this patent does not disclose the intermixing of reinforcing fibers with thermoplastic fibers, the spraying of a yarn, nor the passing of a coated yarn through a bath.

In U.S. Patent No. 4,084,399, a gut is made by twisting carbon fibers and nylon together. In U.S Patent No. 3,073,005, a process for making composite glass fibers is disclosed. U.S. Patent 3,436,797 discloses a method for combining polymeric fibers to form a non-woven web. However, none of these patents discloses the intermixing of reinforcing and thermoplastic fibers to form a tow in which the fibers are substantially parallel to one another nor the application of a coating by spraying a tow and passing the tow through a bath.

One problem with prior art fiber tows arises when they are applied to a mold and cured in an essentially tensionless state. Under these circumstances, a waviness often appears in the cured matrix which undesirably reduces strength properties.

Another problem in the prior art is that the composite yarn tends to become unbound before it is woven into a fabric or is applied to a mold.

A further problem in the prior art is that reinforcing fiber containing tapes and fabric prepegs are generally difficult to form into composite articles, especially articles with complex shaped parts.

Accordingly, it is an object of this invention to prepare fibrous blends which are flexible and drapeable and are useful in forming reinforcing fiber composites with both simple and complex shaped parts.

It is another object of this invention to prepare materials, such as fabrics, which may be formed into fiber composites.

It is a further object of this invention to prepare a non-shrinkable, continuous, reinforcing fiber containing yarn that will not become unbound before being woven or formed into composite articles.

It is a further object of this invention to prepare a reinforcing fiber containing tow or yarn which upon application to a mold and curing will not distort but will produce a cured article having uniform properties throughout.

These and other objectives are obtained by employing the process of the instant invention.

(e) Summary of Invention

Basically, the process of this invention involves combining reinforcing fibers and thermoplastic polymeric fibers into a continuous tow and then applying a uniform coating to the tow to produce a non-shrinkable tow. The non-shrinkable tow may then be employed in forming various structural composites. As used herein, the term "non-shrinkable tow (or yarn)" refers to a tow which has no perceptible shrinkage or only negligible

shrinkage when heated to prepare composite articles.

The fiber blends prepared according to the instant invention are flexible and handleable and have good draping properties so that they can be used to form intricately shaped articles. In addition, when the two fibers are intermixed, complete wetting of the reinforcing fiber by the thermoplastic material is obtained when appropriate heat and pressure are applied. The high degree of wetting is obtained in large measure because of the substantially uniform distribution of the thermoplastic fibers and the reinforcing fibers within the fiber blend and because the coating material gives better compatibility between the matrix and the reinforcing fibers.

The products of the instant invention find particular utility in end use applications where a small radius of curvature in the final product is desired. For example, using the prior art tapes, it was not possible in many instances to prepare articles which had a 90° bend because the tapes would crack or deform at the bend line. However, the process of the instant invention may be employed with radii of curvature as low as 0.002 inch.

## DESCRIPTION OF THE DRAWINGS

Figure 1 is a diagrammatic view of the various devices used in the preferred embodiment for carrying out an application of a coating onto a hybrid yarn.

Figure 2 is a perspective view of a gas spreading means (without its lid) used in carrying out a part of the process of the instant invention.

Figure 3 is a perspective view of the same device with a lid.

## (f) Detailed Description of Invention

### 1. The Thermoplastic Fibers

The thermoplastic polymers which are useful in carrying out the instant invention constitute virtually any type of thermoplastic polymer which can be spun into fibers, including polyethylene, polypropylene, polyester, the various polyamides, polyimides, polyamidimides, polyetherimides, polyacetals polysulfones (e.g., polyether sulfones), polyether ether ketones, polybutylene terephthalate and the like. Although virtually any molecular weight polymer that can be spun into fibers can be employed, preferably relatively high molecular weight thermoplastic polymers are employed. The melting point of the polymer must be at least 50°F and preferably at least 200°F above ambient conditions. Higher melting temperatures insure that there will be no undue sticking or binding of the spun fibers prior to use. In addition to one component polymer systems, mixtures of various thermoplastic polymers may also be employed to advantage where specific combinations of properties are desired.

Of particular importance are the liquid crystal polymers or LCPs. Examples of these polymers include the wholly aromatic polyester resins which are discussed in the following publications: (a) Polyesters of Hydroxybenzoic Acids, by Russell Gilkey and John R. Caldewell, J. of Applied Polymer Sci., Vol. II, pages 198 to 202 (1959), (b) Polyarylates (Polyesters From Aromatic Diacarboxylic Acids and Bisphenols), by G. Bier, Polymer, Vol. 15, pages 527 to 535 (August 1974), (c) Aromatic Polyester Plastics, by S. G. Cottis, Modern Plastics, pages 62 to 63 (July 1975); and (d) Poly(p-Oxybenzoyl Systems): Homopolymer for Coatings: Copolymers for Compression and Injection Molding, by Roger S. Strom and Steven G. Cottis, Coatings Plast. Preprint, Vol. 34, No. 1, pages 194 to 197 (April 1974). See also, U.S. Patent Nos. 3,039,994, 3,169,121, 3,321,437, 3,553,167, 3,637,595, 3,651,014, 3,723,388, 3,759,870, 3,767,621, 3,778,410, 3,787,370, 3,790,528, 3,829,406, 3,890,256 and 3,975,487. The above cited references are incorporated herein by reference.

Other polyesters are disclosed, for instance, in (a) Polyester X7G-A Self Reinforced Thermoplastic, by W. J. Jackson, Jr., H. F. Kuhfuss, and T. F. Gray, Jr., 30th Anniversary Technical Conference, 1975 Reinforced Plastics/Composites Institute, The Society of the Plastics Industry, Inc., Section 17-D, pages 1 to 4; (b) Belgian Patent Nos. 828,935 and 828,936; (c) Dutch Patent No. 7505551; (d) West German Patent Nos. 2520819, 2520820, 27222120, 2834535, 2834536 and 2834537; (e) Japanese Patent Nos. 43-223, 2132-116, 3017-692 and 3021-293; and (f) U.S. Patent Nos. 3,991,013, 3,991,014, 4,057,597, 4,066,620, 4,067,852, 4,075,262, 4,083,829, 4,093,595, 4,112,212, 4,118,372, 4,130,545, 4,130,702, 4,146,702, 4,153,779, 4,156,070, 4,159,365, 4,160,755, 4,161,470, 4,169,933, 4,181,792, 4,183,895, 4,184,996, 4,188,476, 4,191,681, 4,201,856, 4,219,461, 4,224,433, 4,226,970, 4,230,817, 4,232,143, 4,232,144, 4,238,598, 4,238,599, 4,238,600, 4,239,913, 4,242,496, 4,245,082, 4,245,804, 4,247,514, 4,256,624, 4,265,802, 4,267,289, 4,269,965, 4,279,803, 4,299,756, 4,330,457, 4,460,735 and 4,479,999. The above cited references are incorporated herein by reference.

The polyesters and copolyesters which are preferred consist essentially of structural units having recurring groups of the formula:

(I) $\leftarrow O - R_1 - O \rightarrow$ and

(II) $\leftarrow OC - R_2 - CO \rightarrow$ and/or

(III) $\leftarrow O - R_3 - CO \rightarrow$ wherein units I and II, if present, are present in substantially equimolar amounts; $R_1$, $R_2$ and $R_3$ are radicals selected from the group of 1) single and fused six-membered aromatic carboxylic ring systems wherein the chain-extending bonds of the ring system, if attached to the same ring, are

positioned 1,3- or 1,4-(preferably 1,4-) to each other, and if attached to different rings, are preferably in positions parallel and oppositely directed, and 2) multiple six-membered aromatic carboxylic ring systems in which the individual rings are joined by a chemical bond or a trans-vinylene group and in which the chain extending bonds of each ring are in the 1,3- or 1,4- (preferably 1,4-) positions; $R_2$ may also be

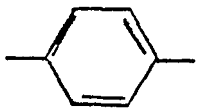 or 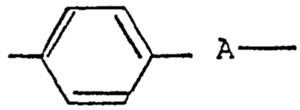

wherein A is a divalent radical containing one or two bicyclic in-chain atoms; and $R_3$ may also be

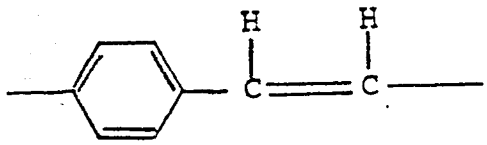

wherein the aliphatic port is attached to the carbonyl group. Preferred group 1) radicals are phenylene and naphthylene. Preferred group 2) radicals are two-ring systems. Illustrative of 1) are

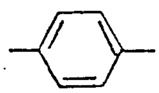 , 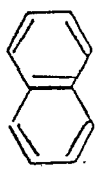 , 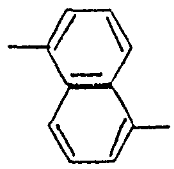 , 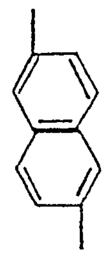

and of 2) are

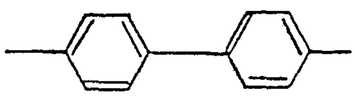 and 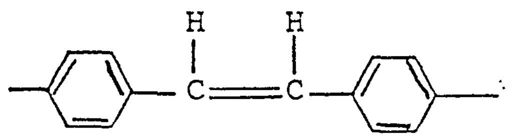

The foregoing ring systems, except for $R_2$ as indicated below are also intended to include one or more substituents, e.g., chloro, bromo, fluoro, or lower alkyl (1-4 carbon atoms) on the ring or rings. The $R_2$ aromatic ring systems should preferably be unsubstituted when only one kind of unit I and one kind of unit II are used, i.e., when a homopolymer is formed to insure obtaining oriented fibers. In the case of copolymers, it is preferred that the $R_2$ aromatic ring systems be unsubstituted because of thermal or hydrolytic instability and/or cost of the $R_2$-ring substituted copolymers.

Also included are those (co)polyesters wherein up to 25 mol percent, preferably up to 5 mol percent, based on the total I, II and III units, are aromatic polymer-forming units (i.e., units wherein the chain extending functional groups are attached to aromatic rings) not conforming to those described above and which do not interfere with the anisotropic melt forming capability of the polymers. A non-limiting list of these units includes:

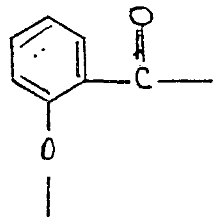 , 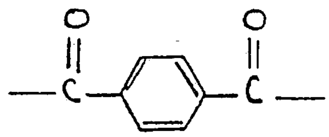 , 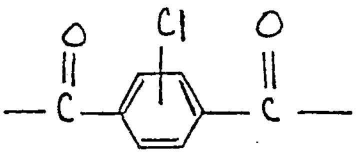 ,

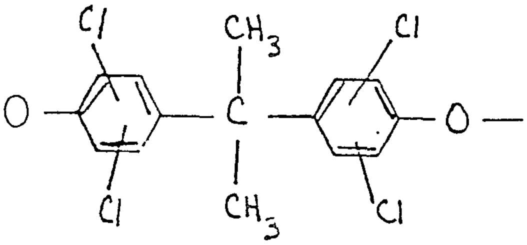 , 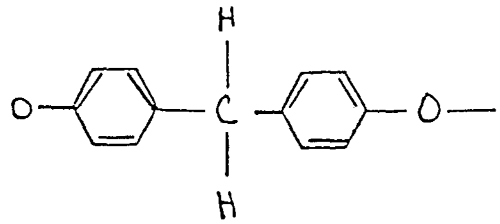

and

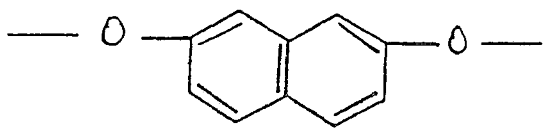

The (co)polyesters, as mentioned above, may comprise units I and II in substantially equimolar amounts or may comprise unit III or may comprise a combination of units I, II, and III and, of course, more than one kind of unit (I, II and/or III) can be present in the polymer.

Preferred (co)polyesters of the invention consist essentially of units I and II. In such polymers, it is preferred that $R_1$ is selected from the group of 1,4-phenylene, chloro, dichloro, bromo, dibromo, methyl, dimethyl and fluoro-1,4-phenylene; 4,4′-biphenylene; 3,3′,5,5′-tetramethyl-4,4′-biphenylene and $R_2$ is selected from the group of trans 1,4-cyclohexylene; trans-2,5-dimethyl-1,4-cyclohexylene; trans-vinylenebis (1,4-phenylene); 4,4′-biphenylene; 2,6-naphthylene; and 1,4-phenylene and with the proviso that more than one kind of unit I or II is present. Of such (co)polyesters, two types are particularly preferred because of properties and cost. In the first type, the polymers consist essentially of the recurring units

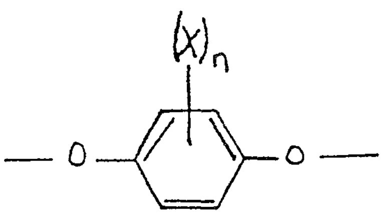 , 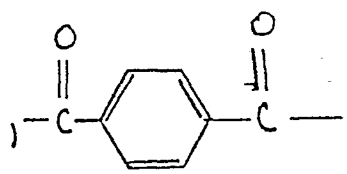 and 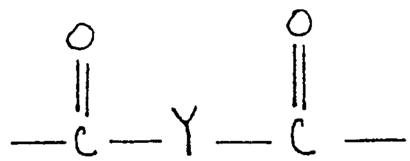

wherein X is selected from the group of chloro-, bromo-, fluoro-and methyl radicals; n is 1 or 2, and Y is selected from the group of 4,4′-biphenylene and 2,6-naphthylene, the ratio of

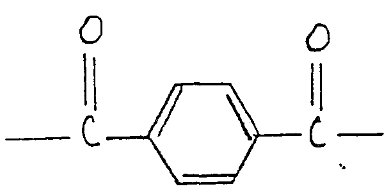 to 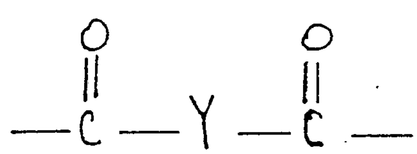

units being within the range of 4:1 to 1:4. In the second type, the polymers consist essentially of the recurring units

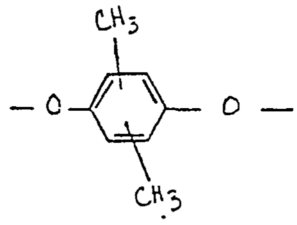, 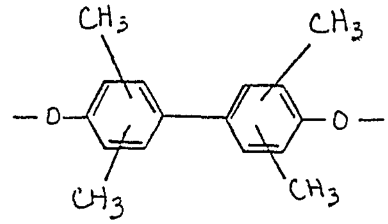 and 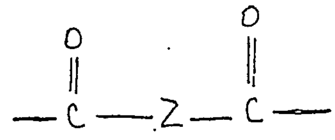

wherein Z is selected from the group of 4,4′-biphenylene, 2,6-napthylene, and 1,4-phenylene, the ratio of

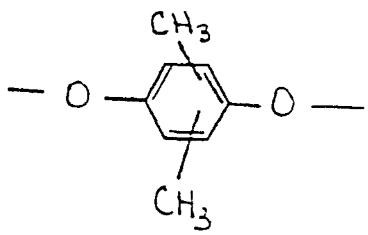 to 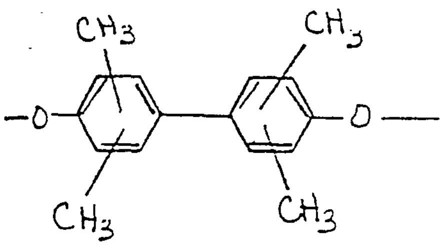

units being within the range of 4:1 to 3:2. With each type of polymer, up to 25 mol percent of non-conforming units may be present as described above.

A list of useful dicarboxylic acids includes terephthalic acid, 4,4′-bibenzoic acid, 4,4′-oxydibenzoic acid, 4,4′-thiodibenzoic acid, 4-carboxyphenoxyacetic acid, 4,4′-transstilbenedicarboxylic acid, 2,6-naphthalenedicarboxylic acid, ethyleneoxy-4,4′-dibenzoic acid, isophthalic acid, the halogen and methyl substituted derivatives of the foregoing dicarboxylic acids, 1,4-trans-cyclohexanedicarboxylic acid, 2,5-dimethyl-1,4-trans-cyclohexanedicarboxylic acid, and the like.

A nonlimiting list of phenolic carboxylic acids includes 6-hydroxy-2-naphthoic acid, 4-hydroxy-4′-carboxy azobenzene, ferulic acid, 4-hydroxybenzoic acid, 4-(4′-hydroxyphenoxy)-benzoic acid and 4-hydroxycinnamic acid and the alkyl, alkoxy and halogen substituted versions of these compounds.

Of the (co)polyesters containing only type III units, the polymers consisting essentially of the recurring units

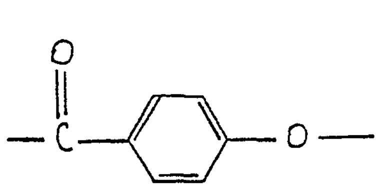 and 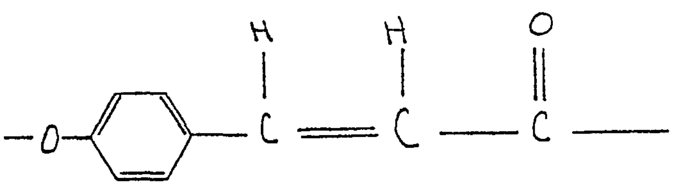

are preferred.

The (co)polyesters are prepared preferably by melt polycondensation of derivatives of dihydric phenols and aromatic-aliphatic, aromatic and cycloaliphatic dicarboxylic acids or their derivatives. A convenient preparative method is the melt polycondensation of the diacetate of a dihydric phenol with a dicarboxylic acid. Alternatively, phenolic carboxylic acids or their derivatives may be used as coreactants in the preparation of polyesters and copolyesters.

A list of useful dihydric phenols preferably in the form of their diacetate derivatives includes hydroquinone, chlorohydroquinone, bromohydroquinone, methylhydroquinone, dimethylhydroquinone, dichlorohydroquinone, dibromohydroquinone, 4,4′-oxydiphenol, 4,4′-isopropylidenediphenol, 4,4′-thiodiphenol, 4,4′-biphenol, 3,5,3′,5′-tetramethyl-4,4′-bisphenol, 3,5,3′,5′-tetrachloro-4,4′-biphenol, 2,6-dihydroxynaphthalene, 2,7-dihydroxynaphthalene, and 4,4′-methylenediphenol and the like.

In addition, it is possible to prepare anisotropic polymers by polymerizing methylacryloxy benzoic acid utilizing an alkali metal hydroxide and free radical initiators as described in U.S. Patent Nos. 4,112,212, 4,130,702 and 4,160,755, which are incorporated herein by reference in their entirety.

Useful phenolic-carboxylic acid derivatives include p-acetoxybenzoic acid and p-acetoxycinnamic acid and the like.

A nonlimiting list of various polyesters and copolyesters includes: poly(methyl-1,4-phenylene, 2,5-dimethyl-transhexahydroterephthalate); copoly(methyl-1,4-phenylene transhexahydroterephthalate/terephthalate) (8/2); copoly(chloro-1,4-phenylene trans-hexahydroterephthalate/isophthalate) (9/1) and 8/2); copoly(ethyl-1,4-phenylene terephthalate/2,6-naphthalate) (7/3); copoly(tert.butyl-1,4-phenylene/3,3′,5,5′-tetramethyl-4,4′-biphenylene/terephthalate) (7/3); copoly(chloro-1,4-phenylene/3,3′,5,5′-tetrachloro-4,4′-biphenylene terephthalate) (7/3).

The liquid crystal polymers including wholly aromatic polyesters and poly(ester-amide)s which are suitable for use in the present invention may be formed by a variety of ester forming techniques whereby organic monomer compounds possessing functional groups which, upon condensation, form the requisite recurring moieties are reacted. For instance, the functional groups of the organic monomer compounds may be carboxylic acid groups, hydroxyl groups, ester groups, acryloxy groups, acid halides, amine groups, etc. The organic monomer compounds may be reacted in the absence of a heat exchange fluid via a melt acidolysis procedure. They, accordingly, may be heated initially to form a melt solution of the reactants with the reaction continuing as said polymer particles are suspended therein. A vacuum may be applied to facilitate removal of volatiles formed during the final state of the condensation (e.g., acetic acid or water).

Commonly-assigned U.S. Patent No. 4,083,829, entitled "Melt Processable Thermotropic Wholly Aromatic Polyester," describes a slurry polymerization process which may be employed to form the wholly aromatic polyesters which are preferred for use in the present invention. According to such a process, the solid product is suspended in a heat exchange medium. The disclosure of this patent has previously been incorporated herein by reference in its entirety. Although that patent is directed to the preparation of wholly aromatic polyesters, the process may also be employed to form poly(ester-amide)s.

When employing either the melt acidolysis procedure or the slurry procedure of U.S. Patent No. 4,083,829, the organic monomer reactants from which the wholly aromatic polyesters are derived may be initially provided in a modified form whereby the usual hydroxy groups of such monomers are esterified (i.e., they are provided as lower acyl esters). The lower acyl groups preferably have from about two to about four carbon atoms. Preferably, the acetate esters of organic monomer reactants are provided. When poly(ester-amide)s are to be formed, an amine group may be provided as a lower acyl amide.

Representative catalysts which optionally may be employed in either the melt acidolysis procedure or in the slurry procedure of U.S. Patent No. 4,083,829 include dialkyl tin oxide (e.g., dibutyl tin oxide), diaryl tin oxide, titanium dioxide, antimony trioxide, alkyoxy titanium silicates, titanium alkoxides, alkali and alkaline earth metal salts of carboxylic acids (e.g., zinc acetate), the gaseous acid catalysts such as Lewis acids (e.g., $BF_3$), hydrogen halides (e.g., HCl), etc. The quantity of catalyst utilized typically is about 0.001 to 1 percent by weight based upon the total monomer weight, and most commonly about 0.01 to 0.2 percent by weight.

The wholly aromatic polyesters and poly(ester-amide)s suitable for use in the present invention tend to be substantially insoluble in common polyester solvents and accordingly are not susceptible to solution processing. As discussed previously, they can be readily processed by common melt processing techniques. Most suitable wholly aromatic polymers are soluble in pentafluorophenol to a limited extent.

The wholly aromatic polyesters which are preferred for use in the present invention commonly exhibit a weight average molecular weight of about 2,000 to about 200,000, and preferably about 10,000 to about 50,000, and most preferably about 20,000 to about 25,000. The wholly aromatic poly(ester-amide)s which are preferred for use in the present invention commonly exhibit a molecular weight of about 5,000 to about 50,000, and preferably about 10,000 to about 30,000; e.g., 15,000 to 17,000. Such molecular weight may be determined by gel permeation chromatography and other standard techniques not involving the solution of the polymer, e.g., by end group determination via infrared spectroscopy of compression molded films. Alternatively, light scattering techniques in a pentafluorophenol solution may be employed to determine the molecular weight.

The wholly aromatic polyesters and poly(ester-amide)s additionally commonly exhibit an inherent viscosity (I.V.) of at least approximately 2.0 dl./g., e.g., approximately 2.0 to 10.0 dl./g., when dissolved at a concentration of 0.1 percent by weight in pentafluorophenol at 60°C.

For the purposes of the present invention, the aromatic rings which are included in the polymer backbones of the polymer components may include substitution of at least some of the hydrogen atoms present upon an aromatic ring. Such substituents include alkyl groups of up to four carbon atoms; alkoxy groups having up to four carbon atoms; halogens; and additional aromatic rings, such as phenyl and substituted phenyl. Preferred halogens include fluorine, chlorine and bromine. Although bromine atoms tend to be released from organic compounds at high temperatures, bromine is more stable on aromatic rings than on aliphatic chains and, therefore is suitable for inclusion as a possible substituent on the aromatic rings.

The thermoplastic fibers which are particularly useful herein are continuous filaments in a tow having a bundle cross-sectional area ranging from about twice that of the reinforcing fiber tow to about one-half that of the reinforcing fiber tow. The denier of individual thermoplastic filaments will be in the range of about 1 to about 50 and the fiber count will depend upon single filament denier (higher counts are required with lower denier filaments). However, in general, from about 10 to about 150,000 filaments, preferably about 100 to about 10,000 filaments, are employed. The modulus of the fiber should be in the range of about 50,000 to about 500,000 psi. The thermoplastic fiber also must exhibit a melting point of more than 50° F., preferably more than 200° F., above ambient temperatures. And of course, the fiber must melt and fuse at temperatures no higher than about 1000° F., preferably no higher than 800° F., in order to be useful herein.

2. The Reinforcing Fibers

The reinforcing fibers useful herein are generally non-thermoplastic fibers such as metallic, ceramic, amorphous, or polycrystalline reinforcing fibers or filaments. Common examples are carbon, glass, boron and boron nitride, ceramic fibers, such as silicon carbide, silicon nitride and alumina, aramids, ordered polymers,

etc.

While not as desirable, the reinforcing fibers may also be thermoplastic fibers. When a thermoplastic fiber is employed as a reinforcing fiber, it must have a melting point higher than the other thermoplastic fiber which will melt to form a composite matrix as well as a different solvent solubility.

The carbon fibers useful herein may be prepared by a variety of methods. Virtually any of the prior art methods of carbon fiber preparation may be employed in this invention.

The preparation of carbon fibers has been well known in the art for many years. Basically, there are two methods for preparing these fibers, which differ with respect to the starting materials employed. One method starts with a natural or synthetic fiber, which is then carbonized. In the other process, petroleum pitch or coal tar pitch is used as the starting material.

Typical of the patents involving the use of pitch is U.S. Patent No. 4,317,809, which is incorporated herein by reference, along with the other patents cited therein. Generally, using the pitch process, the pitch is heated under high pressure and then under atmospheric pressure with sparging to form a mesophase pitch. Following this step, the pitch is converted into a fiber, thermoset, and carbonized.

Included among the fibers which may be formed into graphite or carbon fibers and which are useful in this invention are those materials where the polymeric precursor is, for example, cellulose, acrylic derivatives, and, in particular, polyacrylonitriles. Specifically, the acrylic polymer may contain not less than about 85 mol percent of acrylonitrile units, with not more than about 15 mol percent of a monovinyl compound which is copolymerizable with acrylonitrile, such as styrene, methylacrylate, methylmethacrylate, vinyl acetate, vinyl chloride, vinylidene chloride, vinyl pyridine and the like. Other copolymerizable monomers include styrene sulfonic acid, allyl sulfonic acid, alkyl acrylates and methacrylates, vinyl acetate, vinyl proprionate, vinyl chloride, vinylidine chloride, and the like.

There are numerous procedures for carbonizing the precursor fibers of the instant invention. In general, they involve a first heating step in thes rangse of about 200-400°C., followed by a second heating step in a non-oxidizing atmosphere at temperatures ranging from about 800-3000°C. For examples of these processes which are incorporated by reference herein in their entirety, see U. S. Patent Nos. 4,197,282, 4,079,122, and 4,131,644.

The glass fibers utilized are manufactured and marketed commercially. The fibers are drawn from a molten supply of glass contained in a platinum container having a large plurality of very fine holes in the bottom thereof from which the molten glass is drawn at high rates of speed which attenuate the glass into extremely fine diameter. The glass filaments are pretreated as drawn from the platinum container, usually called a "brushing" with a size serving to enhance the compatibility of the ultimate glass yarn with the thermoplastic fiber which is utilized.

The glass fibers contemplated are continuous glass fibers in the form of unstranded filaments, stranded glass filaments, untwisted bundles of stranded glass filaments including twistless roving all hereinafter referred to as glass fibers.

Size compositions are contemplated herein and those preferred for use in the practice of the present invention are those conventionally used in the treatment of glass fibers. Such size compositions contain, as the essential component, a glass fiber anchoring agent such as an organo silicon compound or a Werner complex compound.

Preferred anchoring agents are the amino silanes, such as gamma-aminopropyltriethyoxy silane, N-(betaaminoethyl)gamma-aminopropyltriethoxy silane, etc. However, use can also be made of any of the organo silanes as well as the corresponding silanols and polysiloxanes. Representative of other suitable anchoring agents which can be used in the practice of this invention are the organo silicons, their hydrolysis products and polymerization products (polysiloxane).

Instead of organo silicon as described above, use can also be made of Werner complex compounds containing a carboxylate group coordinated with the trivalent nuclear chromic atoms, and in which the carboxylato group may also contain an amino group or an epoxy group. Suitable Werner complex compounds include stearato chromic chloride, methacrylato chromic chloride, aminopropylato chromic chloride, glycine chromic complex or glyclato chromic chloride.

Generally, any of the commercially available glass fibers that have a size that can withstand the processing conditions for preparing composite thermoplastic articles without much degradation can be employed in the present process. It is preferred to employ glass fibers that have a minimum of sizing on them so that the fibers can be spread more easily. The presence of the size on the glass fibers does not generally affect the properties of composite articles prepared from the fibers. For example, sized glass fibers from OCF can be readily employed with polyacetal, nylon, and polyester fibers in the present invention.

Ceramic fibers contemplated for use herein include silicon carbide (composed of ultrafine beta-SiC crystals), silicon nitride ($Si_3N_4$) and alumina ($Al_2O_3$) fibers.

Any silicon carbide fiber system with the requisite strength can be used, although a multi-filament silicon carbide yarn with an average filament diameter up to 50 microns is preferred and yarn with average filament diameter of 5 to 15 microns is especially preferred. If a silicon carbide monofilament is used, a typical silicon carbide monofilament of approximately 140 microns diameter is available from AVCO Systems Division, Lowell, Mass. This fiber exhibits an average tensile strength of up to 3450 MPa, has a temperature capability of over 1300°C and is stable in oxidizing environments.

Alumina fibers have been available for several years. They have been of particular interest for application in

metal matrix composites because of their excellent strength and modulus, especially at high temperatures. The two principal types of alumina fiber had been, however, the large diameter (>350 microns) single crystal rods or alumina whiskers. The problems of handling and processing whiskers and the very high cost of the single crystal fiber dampened the enthusiasm for their use in composites. The situation changed, however, with the advent of high quality alumina yarns which, because of their low potential cost and attractive mechanical properties, could be seriously considered for use in composites. In general, these fibers are produced by E.I. DuPont de Nemours, Inc. and 3M Corporation in the USA and Sumitomo Chemicals Co. in Japan.

The DuPont fiber, referred to as fiber FP, is a round cross section, 20 microns in diameter, continuous length yarn having 210 fibers per tow. It is available in two forms. Type I is pure alpha alumina while Type II is similar but coated with a thin layer of glass. Type II was originally intended for resin matrix composites; however, it is found by this invention that both are suitable for ceramic composites. Although the initial fiber strength is not particularly high, on the order of 1380 MPA (200,000 psi), it is very important to note that this strength is stable and not affected by handling and is not much different from that realized in composites reinforced with alumina rods of initially higher unhandled "pristine" strength.

The Sumitomo Chemicals fibers are also produced in yarn form; however, there the similarity with fiber FP ends. This fiber is not pure alumina and in fact, it is the presence of some $SiO_2$ and a very fine structure which permits a claimed use temperature to be 1350°C.

On the basis of specific mechanical properties this fiber is attractive. Its low density and high tensile strength provide a specific strength nearly twice that of fiber FP while the specific modulus approximately equals the FP property. The Sumitomo fiber appears to have superior handleability.

The known properties of boron nitride, properties such as exceptionally high heat resistance (1800°F in oxidizing 5000°F in reducing atmospheres), dielectric strength (950 v./mil), high surface and volume resistivity and low dissipation factor over a wide temperature range, make it a potentially attractive high temperature reinforcing fiber candidate. The fibers may vary in diameter although those preferred are about 10 microns in diameter and fibers having diameters up to about 30 microns may be used. Continuous boron nitride fibers (99 + % boron nitride) are available commercially from the Carborundum Corporation.

The reinforcing fibers which are particularly useful herein have bundle or tow deniers in the range of from about 100 to about 100,000 and filament counts of from about 100 to about 300,000, preferably deniers of about 1000 to about 16,000 and filament counts of about 3,000 to about 24,000. The fibers also should exhibit a tensile strength of at least about 100,000 psi and a tensile modulus of about 10-120 x $10^6$ psi.

## 3. The Combined Fibers

In the instant invention, the continuous reinforcing and continuous thermoplastic fibers are combined by any suitable means to form a tow. For example, the fibers can be combined by pulling reinforcing and thermoplastic fibers from spools to form a yarn in which the fibers are preferably in a substantially parallel distribution in the yarn. Optionally, the fibers in such a yarn can be intermixed by any suitable means, such as an air jet. Preferably, the fibers are combined and intermixed by first spreading the separate carbon and thermoplastic tows, such as with combs and/or air jets, and then intermixing the spread tows on one or more rolls or bars (rods) and/or with an air intermingling means, such as an air jet. The spreading of the tows and their intermixing are described in greater detail below with reference to the figures.

The weight ratio of the two fibers which are intermixed can vary widely. However, in order to prepare satisfactory composites, it is necessary that sufficient thermoplastic polymer fibers be employed to obtain complete wetting of the reinforcing fibers. Generally, no less than about 30 percent, by volume, of the thermoplastic polymer fibers may be employed. The maximum amount of thermoplastic polymer depends upon the strength properties which are required. In general, when less than about ten percent, by volume, of the reinforcing fiber is present, the resulting composite products have strength and stiffness properties which are poor in relation to products containing higher amounts of reinforcing fibers. Preferably about 20 to about 60 percent and most preferably about 50 to about 60 percent, by volume, of the reinforcing fiber material should be present in the combined tow.

It should, of course, be understood that the combined tow may contain two or more types of the reinforcing fibers described above, such as glass and carbon fibers. However, when two or more types of reinforcing fibers are employed, the maximum combined amount of the reinforcing fibers should not exceed the upper limit specified above for the reinforcing fiber.

## 4. The Coating For The Combined Fibers

After the reinforcing and thermoplastic fibers are combined to form a tow, a uniform coating is applied to the tow. The coating that is employed must be compatible with the thermoplastic fiber in the tow and with the thermoplastic matrix which results when the yarn is cured and must have high temperature stability. Preferably in order to provide maximum compatibility, the coating should be formed from a thermoplastic material which is the same as or similar to the polymeric materials which are described above for use in forming the

thermoplastic fiber of the instant invention. Although virtually any molecular weight thermoplastic polymer may be employed, in order to form a suitable coating material it may, however, be necessary to employ somewhat lower molecular weight versions of the polymers described above in order to render polymers soluble in a solvent.

The preferred coating materials are thermoplastic polymers including polyalkylene polymers such as polyethylene or polypropylene, polyesters, polyamides, polyimides, polyamidimides, polyetherimides, polysulfones, polyether ether ketones and the like, including particularly, the liquid crystal polymers further described above. Most preferred are the polyimide sulfone prepolymers (e.g., polyamic acid), the polyether sulfones and the acetylene terminated polyimides.

The solvent which is used to dissolve the coating polymer should have a boiling point less than the melting point of the particular thermoplastic fiber employed and should not dissolve or swell the thermoplastic fibers to which it is applied. The type of solvent used will depend upon the nature of the thermoplastic coating material utilized. Examples of such solvents include appropriate aromatic hydrocarbons, such as toluene and xylene, ketones, such as methylethyl ketone, methylisobutyl ketone, chlorinated hydrocarbons, such as methylene chloride, carbon tetrachloride, allyl chloride, and trichloro ethylene, meta-cresol, trifluro acetic acid, ortho-chlorophenol, cyclohexane, water, and diglyme. It sometimes may be necessary to heat the solvent in order to dissolve the particular thermoplastic polymer. For example, meta-cresol must be heated to dissolve PET polyesters. Mixtures of the above mentioned solvents may also be employed. The preferred solvents are methylene chloride, diglyme and water.

## 5. Application Of The Coating

### A. Spraying

The application of a uniform coating takes place in two stages. In the first stage a coating is sprayed onto the fibers shortly after the fibers are combined into a tow. The purpose of spraying the tow is to lock the fibers in place so that they will not separate during the remainder of the process. Any suitable means for spraying the tow may be employed. The solids content of the coating solution to be sprayed onto the tow is generally about 0.1 to about 2.0 percent and preferably about 0.75 percent by weight based upon the total weight of the coating solution. Generally, the amount of coating applied during spraying is between about 1.0 and 5.0 percent by weight based upon the total weight of the fiber and the dried, sprayed coating. Most preferably, it is between about 2.0 and about 3.0 percent by weight. If an insufficient amount of size is applied, the fibers will not remain locked together and the tow's properties will be adversely affected.

After application of the coating, the tow is heated, preferably in a perforated heating means which has been wrapped with heating tape, to remove the solvent in which the polymeric coating is dissolved. Any type of heating means may be employed as long as the solvent is adequately removed from the coating. In general, the temperature of the heating tube will be significantly less than the melting point of the thermoplastic fiber yet near or above the boiling point of the solvent which is chosen.

The residence time in the heating zone and the temperature of application are interdependent. With longer heating zones, higher linespeeds may be employed. Conversely, with shorter, higher temperature heating zones, similar line speeds may be employed. Generally, a heating tube two and a half to three feet long will be long enough to enable the tow to pass through the tube at linespeeds of up to 30 meters per minute at appropriate temperatures. When the tube is about three feet long, the residence time is usually in the range of about two to about ten seconds.

### B. Passing Through A Bath

In the second stage of the application of a uniform coating, the tow is passed through a bath in order to further insure that dimensional stability of the hybrid yarn is maintained even during polymer matrix formation. The bath serves a double purpose. First, it controls the amount of coating on the fibers by washing off excess coating applied during the spray steps or adding coating if a deficient amount of coating was sprayed on the fibers. Second, it insures a uniform coating on the exterior of the tow. In general, the bath will contain the same coating polymer that is sprayed onto the fibers. However, a different coating polymer may be employed as long as it is compatible with the thermoplastic materials used herein and is dissolved in a solvent of the types specified above. Preferably the bath will be maintained at a solids content of about 0.1 to about 2.0 percent by weight and most preferably about 0.25 percent by weight based on the total weight of the bath.

When the tow is passed through the bath, part of the excess coating applied by spraying is washed off or coating is added if a deficient amount of coating was sprayed on the fibers so that the final weight of the coating of the yarn is between 0.2 to about 1.4 percent, preferably about 0.75 to about 1.4 percent by weight based upon the total weight of the tow and the dried coating.

It is important that the fiber tow be both sprayed and passed through a bath. If the tow is only sprayed, the

tow will not have a thin, uniform coating on the exterior of the tow. As a result, it is very difficult and very inefficient to use the sprayed tow for weaving, even though it has good hybridization properties.

If, on the other hand, the tow is only passed through a bath and not sprayed, it is difficult to prepare an intermixed tow. If a tow is only passed through a bath, it usually has less intermixing of the fibers or even has a layer of thermoplastic fibers and a layer of reinforcing fibers instead of a good intermixture of the fibers within the tow. The reason is that without spraying, the fibers are not locked in an intermixed configuration before they enter the bath and tend to segregate into separate thermoplastic and reinforcing fiber layers. The unmixed tow can be utilized in weaving but has poor hybridization properties. Thus, to insure an intermixed tow that has both excellent weaving and hybridization properties, after intermixing, the tow should be both sprayed and passed through a bath.

It is also important that the percent by weight level of the coating polymer in the spraying solution and the bath be kept low. If the level is too high, a thick coating or a large amount of coating polymer will be deposited upon the tow. When that occurs, the molding characteristics of the tow can be adversely affected. For example, when too much coating is applied to the tow of the instant invention, the tow loses its ultimate flexibility thereby making molding of particularly intricately shaped articles difficult.

The length of the container for the bath can be quite short, such as five centimeters. Residence time in the bath is usually brief -- on the order of (two seconds or less) depending on the linespeed. After the "wet" material leaves the coating bath, it is passed through a pair of nip rolls to remove excess solvent. Then it is heated in order to remove fully the solvent from the coating. Any type of heating means may be employed as long as the solvent is adequately removed from the coating. Preferably, the tow is heated in an oven. The oven may be of any convenient design but preferably comprises a convection oven with two levels. When the oven has two levels, the tow may be passed between the levels several times to increase the residence time and thereby insure complete evaporation of the coating solvent. The temperature of the oven is dependent upon the same factors as the temperature of the heating tube. Residence time again varies with line speed and oven temperature but generally is in the range of about one to about 10 seconds.

After removal from the oven the reinforcing fiber tow is then taken up on a spool and strand.

## 6. Explanation Of The Figures

In Figure 1 of the instant invention, a reinforcing fiber tow (1) is obtained having the properties specified above. The fibers from the reinforcing fiber tow are passed through a jet (3) which is capable of producing a stream of low pressure gas. Individual thermoplastic polymer fibers, such as polyether ether ketone fibers, are mounted on bobbin racks (2) and fed directly into a gas banding jet (4).

The gas banding jet shown in Figs. 2 and 3 may be used to uniformly spread the thermoplastic fiber and reinforcing fiber tows so as to preserve the separation of the continuous individual fibers. The banding jet consists of a gas box (13) into which compressed air or another gas is fed through a conventional adjustable gas metering means (14). The preferred pressure of gas flow into the thermoplastic gas banding jet is in the range of about 1.0 to about 2.5 psi. One, or more than one, gas exit ports (15) are provided to cause gas from within the gas box to impinge in a generally perpendicular fashion upon the fiber tow which passes across the exit ports. Preferably the exit ports are V-shaped and pointed in the direction of movement of the fiber tow across the box.

The preferred pressure of gas flow across the reinforcing fibers is in the range of approximately 0.5 to 1.0 psi. To minimize the possibility of damaging individual fibers within the reinforcing fiber tow, a low gas pressure is used and preferably compressed air is not used. Any suitable device that is capable of delivering a high volume of low pressure air may be used. One source of low gas pressure is the air output outlet from a vacuum cleaner which can be placed above or below the fiber tow.

As shown in Figs. 2 and 3, the gas banding jet is provided with shims (16) or other means to allow a gas box cover (17) (shown in Figure 3) to be attached, so that a flow channel for the fibers is provided. The gas box cover is held in place by a convenient attachment means, such as clamps (18).

After the fibers are spread by jets (3) and (4), they are continuously intermixed using any suitable intermixing means, such as a gas jet, bars (rods) or rolls. In Fig. 1 the intermixing means is a pair of longitudinally extended staggered rolls or rods (5). Both rolls or rods may either be stationary or rotating, or one may be stationary and the other rotating. It is preferred to have two rotating rolls because that reduces fiber damage due to friction as the fibers are passed over the rolls. The fibers from the spread reinforcing fiber tow and the fibers from the spread thermoplastic tow or yarns both initially come into contact together in the same area on the bottom of the first roll. The fibers then are deflected across the top of the second roll and, as a result, are intermixed.

In an alternative mixing process, the two fiber tows are fed simultaneously into a gas jet or other gaseous intermixing means in a relatively tension-free state. The gas box depicted in Figures 2 and 3 and described above may be used to intermix the fibers. In addition, the fibers may be fed into a gas jet for further intermixing after they have been intermixed on rolls or rods.

In order to insure complete intermixing, it is important that both fiber tows be uniformly spread across their entire width prior to mixing and that the area within which both tows are spread be similar. In other words, the thermoplastic and reinforcing fiber tows must be spread to essentially the same selected width. Unless the

tows are spread to approximately the same width, the fibers at the edge of the wider tow will not come into contact with fibers of the other tow when the tows are brought together on the rolls. As a result, complete intermixing will not occur.

After the tows are intermixed on the rolls, each fiber in the mixed tow is in a substantially parallel relationship to the other fibers in the tow and there is a substantially uniform distribution of thermoplastic and reinforcing fibers in the intermixed tow. It is important that the reinforcing fibers be substantially parallel to one another in the intermixed tow. If the fibers are not substantially parallel, the strength properties of the tow will be reduced because forces cannot be evenly distributed along the entire length of the fibers when the fibers are used in making composite articles. A substantially uniform distribution of the fibers allows for complete wetting of the reinforcing fibers when the intermixed tow is employed to prepare composite articles.

Finally, it is necessary that intermixing be undertaken in a relatively tension-free state. If high tension is imparted to either of the fiber tows, it is difficult to spread the fiber tow, and full (or optimal) intermixing may not occur.

The intermixed tow is then passed by a spray gun coating applicator (6). The coating applicator sprays a fine mist of adhesive coating to lock and press the fibers in place.

After the adhesive coating is sprayed onto the fibers, the intermixed tow is directed through a perforated heating tube (7), which is wrapped with a heating tape, to remove the solvent in which the coating was dissolved.

After the intermixed hybrid yarn (8) has passed through the heating tube, it is passed through bath (9) to insure a uniform coating. The tow is then passed through a pair of nip rolls (10) to remove excess coating solvent from the bath. The rolls are preferably rubber. The removal of much of the solvent by passing the tow through the nip rolls decreases the amount of time needed to dry the tow and thereby makes the process more economical. The intermixed tow is then passed through an oven (11) to remove the remaining coating solvent. The intermixed hybrid yarn is taken up on a roll (12) at the same rate as the feed rate and with a line tension of about 50 grams.

It should be understood that the process depicted in Figure 1 can be carried out in two stages. In the first stage, the fiber is taken up on a roll after the tow is sprayed and heated in the heating tube. The fibers can be stored until they are passed through a bath in a second stage and heated in an oven. When corrosive solvents, such as methylene chloride, are used, it is preferred to use a two stage process.

## 7. Uses For The Combined Tow

In use, the combined fibers may be filament wound, protruded, woven into one, two or three dimensional fabrics, or otherwise assembled and placed on a mold and heated under pressure to the flow temperature of the thermoplastic polymer to form composite articles which are useful in a variety of end uses where high strength, high stiffness and low weight are essential. For exanple, the composites formed from products prepared according to this invention may be used in forming spacecraft, airplane or automobile structural components. In addition, the reinforcing fiber blends of the instant invention find particular utility in those end uses where complex, three-dimensional shapes are involved.

As pointed out above, the compositions of the instant invention are particularly useful where a small radius of curvature requiring substantial bending and shaping of the compositions of the instant invention is desired. The only limiting factor in forming reinforcing fiber shaped articles using the compositions of the instant invention is the "bendability" of the reinforcing fiber itself. Therefore, utilizing the compositions of the instant invention, it is possible to prepare materials having a minimum radius of curvature of about 0.002 in. However, with prior art thermoplastic tapes, the minimum radius of curvature is about 0.005 in. (Even then, fiber directionality or alignment is distorted). As structural elements formed from the fiber tows of this invention are heated under pressure above the melting point of the thermoplastic fiber, these fibers melt and fuse the reinforcing fibers together forming a consolidated composite product containing well dispersed reinforcing fibers. Using the fiber blends of the instant invention, it is possible to prepare recreational articles, such as tennis racquet frames, racquetball racquet frames, hockey sticks, ski poles, fishing rods, golf club shafts and the like.

The fibers of the instant invention find particular utility in filament winding applications. As pointed out above, in the prior art it was extremely difficult to prepare composite articles utilizing the prior art fiber tapes. These tapes, which are prepared on an extremely large scale, are difficult to handle on a small scale, and it is particularly difficult to form them into intricately shaped articles. While the prior art employed the filament winding process with success, this process was limited to a use of reinforcing fibers in combination with thermosetting resins if long, thin rods were to be prepared. In the prior art process, the reinforcing fiber was wound onto a mold after applying a thermosetting coating or coated with the thermosetting material after winding. As a result, it was often difficult for the thermosetting material actually to penetrate and/or achieve good wetting of closely wound products.

Utilizing the process of the instant invention in a modified filament winding procedure, it is possible to prepare intricately shaped articles when the fiber blends are oriented in directions not parallel to the long axis of the article, utilizing thermoplastic polymers in conjunction with reinforcing fiber reinforcements. This modified filament winding process begins with the use of the combined tows of the instant invention. These

tows may be fed directly to a filament winder and continuously applied to a mold. As the filament winder moves around or up and down the mandrel or form, the reinforcing fiber/thermoplastic fiber tow is applied directly to the mold and heated using a radiant heater or other suitable means for immediately melting and fusing the thermoplastic polymeric fibers within the reinforcing fiber tow. In other words, the reinforcing fiber/thermoplastic fiber tow should be heated under pressure as soon as or soon after it meets the mandrel. After full melting and resolidification occurs, the mandrel either may be dissolved using a suitable solvent, may be pulled from the product, or the mandrel may actually become a part of the product.

Alternatively, the non-shrinkable tow may first be applied to a mold or mandrel by a filament winding process and then heated under pressure to form a composite article instead of immediately heating the tow after it is applied to the mold or mandrel.

Another unique use for the fiber blends prepared according to the instant invention is in forming woven and knitted fabrics utilizing standard techniques. According to this process, the tow of the instant invention is used either alone or in combination with other tows or fibers to form a woven or knitted mat. When the hybrid yarn of the instant invention is woven or knitted into a fabric and then cured, the resulting composite is uniform and regularly shaped. Prior art composites, however, are often irregular and uneven and exhibit a characteristic "wavy" pattern which, it is thought, is caused by uneven shrinkage of the fibers in the fabric or yarn used to prepare the composite. However, because the hybrid yarn of the instant invention does not shrink to the degree that prior art composites did, irregularities, unevenness and waviness in composites are eliminated. The fibers do not shrink because the coating essentially glues the fibers together.

The hybrid yarn may also be braided into three dimensional objects, which upon molding will form final net shaped articles.

The woven fabrics prepared according to the process of this invention may be applied to a desired mold or otherwise used in forming a composite. The previous method of choice of forming such materials involved laying down a layer of reinforcing fibers, followed by a layer of thermoplastic film, followed by another layer of reinforcing fibers, etc. Now the materials can be combined in a solid woven layer and much more readily applied to a mold. After the desired number of layers are stacked, they can be heated under pressure above the flow point of the thermoplastic polymer, and a composite having good mechanical strength and stiffness properties results. The strength and stiffness enhancement can occur in one or more directions, i.e., those directions along which the reinforcing fibers are aligned parallel to the defining vector.

The invention is illustrated in the following examples.

## Example I

Using a process similar to the one depicted in Figure 1, except that the tow was collected after spraying and before passing it through a bath, an approximate 55/45 percent by volume blend was prepared based upon a Celanese Corporation Celion 3000 carbon fiber (3000 filament count) and a polyether ether ketone (PEEK) thermoplastic polymer. The Celion 3000 carbon fiber had a density of 1.7 g/cc, a tensile strength of 34 X $10^6$ psi and an ultimate elongation of 1.5 percent. The carbon fiber was produced from a polyacrylonitrile precursor and is available from Celanese Specialty Operations Company. The carbon fiber was placed on a creel (2). The fibers prepared from the PEEK had recurring units of the formula:

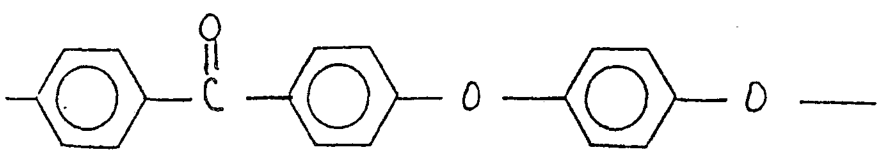

and had a density of 1.3 g/cc, a melting point of 338° C., an initial modulus of 20-50 grams, a tenacity of 1.5-2.3 g/denier, an elongation of 40-100 percent, a dpf of 9 (g/900m) and came in a package containing 33 filaments per tow. Three tows (33 filaments per tow) of the PEEK fibers were placed on three creels (2) and directed through a gas banding jet (4) operated at a pressure of about 2 psi to spread the fibers. The carbon fibers were directed through a jet (3) with a low pressure air source at a pressure of about 1 psi.

The PEEK and carbon fibers were intermixed as they passed over staggered rotating rolls (5). After intermixing, the fibers in the tow were substantially parallel to one another and in a substantially uniform distribution. The intermixed fibers were sprayed by spray gun (6) with a 0.75 percent by weight poly (ether sulfone) (PES) coating solution. The PES polymer was Victrex PES 5200G and had recurring units of the formula:

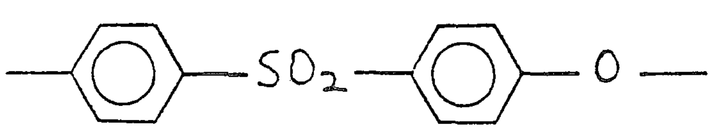

a Tg of about 210°C and was obtained from Imperial Chemical Industries. The coating solution was prepared by

dissolving 0.75 gram of PES in 99.25 grams of methylene chloride. The methylene chloride was then evaporated as the intermixed yarn passed through a 50°C, two and one half foot long heating tube (7) at a line speed of 10 meters per minute. The residence time was about five seconds. The intermixed hybrid yarn (8) was then taken up on a roll (not shown in Figure 1) at a line tension of 50 grams.

Although the PES mist helped lock the PEEK fibers and the carbon fibers in their intermixed position, all the fibers were not yet bound to other fibers. Complete binding of the fibers was achieved by passing the sprayed hybrid yarn (8) through a coating bath (9) containing a 0.25 percent by weight PES coating solution dissolved in methylene chloride. The PES was the same as the PES sprayed on the fibers. A uniform coat of the PES coating on the outer layer of the yarn resulted. The yarn was passed between two rubber nip rolls (10) to remove much of the bath solvent. The coated yarn was passed through a 50°C oven (11) to dry the yarn and then taken up on roll (12) at a line speed of about 10 meters per minute.

The hybrid yarn was tested for shrinkage by placing a sample in a 200°C oven for 20 minutes. No shrinkage occurred. However, a hybrid yarn of the same composition that was not sprayed or coated with a coating shrank seven percent under the same conditions. The coated hybrid yarn was also tested for fuzz. Fuzz is comprised of broken filaments and fibers that form a ball or raised portion on the surface of a yarn similar to balls of fuzz that appear on clothing, such as sweaters. The coated yarn had 0.0089 grams of fuzz whereas an uncoated yarn of the same composition had 0.0195 grams of fuzz.

When the hybrid yarn was subsequently used in weaving, it was easier to handle than an uncoated hybrid yarn and the properties of the coated yarn were not adversely affected by the coating.

## Example II

Example I is repeated except that glass fiber is used instead of carbon fibers. The glass fiber is E-glass fiber (204 filament count designated as ECG 150 1/0) and has a density of 2.55 g/cc, a tensile strength of 300,000 psi, a tensile modulus of 10.5 x $10^6$ psi and an ultimate elongation of 2.8 percent. The glass fiber is available from both PPG Industries and OCF.

When tested as in Example I, no shrinkage occurs and the coated yarn has less fuzz than an uncoated yarn of the same composition. In addition, it is easier to handle in weaving than an uncoated yarn of the same composition and the properties of the coated yarn are not adversely affected by the coating.

## Example III

Example II is repeated except that S-glass fibers are employed instead of E-glass fibers. The resulting yarn is more suitable for aerospace applications than the yarn prepared from E-glass fibers in Example II.

## Claims

1. A non-shrinkable, continuous fiber tow useful in forming composite articles, said tow containing individual fibers that are substantially parallel to one another, and comprising a blend of about 90 to about 30 percent by volume, based on the total fiber content, of spun, continuous, individual, thermoplastic fibers having a melting point of at least about 50°C, and about 10 to about 70 percent by volume, based on the total fiber content, of continuous, individual, reinforcing fibers, said tow having applied thereto about 0.2 to about 1.4 percent by weight, of a uniform coating based on the total weight of the tow and the dried coating.

2. A non-shrinkable, continuous, intermixed fiber tow useful in forming composite articles, said tow containing individual fibers that are substantially parallel to one another and comprising a uniformly and continuously intermixed blend of about 90 to about 30 percent by volume, based on the total fiber content, of spun, continuous, individual thermoplastic fibers having a melting point of at least about 50° C, about 10 to about 70 percent by volume, based on the total fiber content, of continuous, individual reinforcing fibers, said tow having applied thereto about 0.2 to about 1.4 percent by weight of a uniform coating based upon the total weight of the tow and the dried coating.

3. The tow of Claims 1 or 2 wherein the thermoplastic fibers are present at about the 80 to about the 40 percent level, and the reinforcing fibers are present at about the 20 to about the 60 percent level.

4. The tow of Claim 3 wherein the reinforcing fibers are present at about the 50 to about the 60 percent level.

5. The tow of Claims 1 or 2 wherein the reinforcing fibers are selected from the group consisting of metallic, ceramic, amorphous, and polycrystalline fibers.

6. The tow of Claims 1 or 2 wherein the reinforcing fibers are selected from carbon, glass, boron, aramid or ceramic fibers.

7. The tow of Claims 1 or 2 wherein prior to being blended with the thermoplastic fibers, the reinforcing fibers are in a tow having a bundle denier of about 100 to about 100,000.

8. The tow of Claims 1 or 2 wherein prior to being blended with the thermoplastic fibers, the reinforcing

fibers are in a tow having a bundle denier of about 1,000 to about 16,000.

9. The tow of Claims 1 or 2 wherein prior to being blended with the thermoplastic fibers, the reinforcing fibers are in a tow containing about 100 to about 300,000 filaments.

10. The tow of Claims 1 or 2 wherein prior to being blended with the thermoplastic fibers, the reinforcing fibers are in a tow containing about 3,000 to about 24,000 filaments.

11. The tow of Claims 1 or 2 wherein the thermoplastic fibers are selected from the group consisting of polyethylene, polypropylene, polyesters, nylons, polyamidimides, polyetherimides, polysulfones, polyether ether ketones, polyacetals and wholly aromatic polyester resins.

12. The tow of Claims 1 or 2 wherein the thermoplastic fibers are liquid crystal polymer fibers.

13. The tow of Claims 1 or 2 wherein the thermoplastic fibers are wholly aromatic polyester fibers.

14. The tow of Claims 1 or 2 wherein the individual thermoplastic fibers have a denier in the range of about 1 to about 50 and wherein prior to being blended with the reinforcing fibers, the thermoplastic fibers are in a thermoplastic fiber tow containing from about 10 to about 150,000 filaments.

15. The tow of Claims 1 or 2 wherein the uniform coating is selected from the group consisting of polyimide sulfones, polyethersulfones, and acetylene terminated polyimide polymers.

16. The tow of Claims 1 or 2 wherein the uniform coating is polyethersulfone.

17. The tow of Claims 1 or 2 wherein the uniform coating is present at about the 0.75 to about the 1.4 percent by weight level based upon the total weight of the tow and the dried coating.

18. A process for the preparation of a non-shrinkable tow, comprising: (a) combining thermoplastic polymer fibers having a melting point of at least about 50°C with reinforcing fibers to form a tow and (b) applying a uniform coating to the tow.

19. A process for the preparation of a non-shrinkable tow comprising: (a) combining thermoplastic polymer fibers having a melting point of at least about 50°C with reinforcing fibers to form a tow; (b) spraying the tow with a coating solution; (c) heating the tow; (d) passing the tow through a bath to insure a uniform coating on the tow; and (e) collecting the coated tow.

20. A process for the preparation of a non-shrinkable, intermixed tow comprising: (a) forming a continuous tow of continuous reinforcing fibers; (b) forming a continuous tow of continuous thermoplastic polymer fibers having a melting point of at least about 50°C; (c) uniformly and continuously spreading the thermoplastic polymer fiber tow; (d) uniformly and continuously spreading the reinforcing fiber tow; (e) uniformly and continuously intermixing the spread reinforcing fiber tow and the spread thermoplastic polymer fiber tow such that there is provided a substantially uniform and a substantially parallel distribution of the thermoplastic fibers and the reinforcing fibers within an intermixed tow; (f) spraying the intermixed tow with a coating solution; (g) heating the tow; (h) passing the tow through a bath to insure a uniform coating on the tow; and (i) continuously collecting the coated, intermixed tow.

21. The process of Claims 18 or 19 wherein the fibers are in a substantially uniform distribution after being combined.

22. The process of Claims 18 or 19 wherein the thermoplastic and reinforcing fibers are spread before being combined.

23. The process of Claim 18 wherein the uniform coating is applied by spraying the tow with a coating solution and then passing the tow through a bath.

24. The process of Claims 19, 20 or 23 wherein the tow is heated after being passed through the bath.

25. The process of Claims 19, 20 or 23 wherein the tow is passed through a heating oven after passing through the bath.

26. The process of Claims 19, 20 or 23 wherein the coating solution that is applied to the fibers and the bath is prepared from polymers selected from the group consisting of polyethersulfone, polyimide sulfone and acetylene terminated polyimide polymers.

27. The process of Claims 19, 20 or 23 wherein a coating polymer is present in the coating solution and the bath in the range of about 0.1 to about 2.0 percent by weight of the solution or bath.

28. The process of Claim 27 wherein the coating solution and the bath are comprised of polyethersulfone dissolved in methylene chloride at about the 0.1 to about the 2.0 percent by weight level based upon the total weight of the coating solution or bath.

29. The process of Claim 27 wherein the coating solution that is sprayed on the fibers contains the coating polymer at about the 0.75 percent by weight level based upon the total weight of the coating solution and the bath contains the coating polymer at about the 0.25 percent by weight level based upon the total weight of the bath.

30. The process of Claims 19, 20 or 23 wherein the amount of coating on the fibers after spraying is in the range of about 1.0 to about 5.0 percent by weight based upon the total weight of the tow and the dried coating, and the amount of coating on the tow after the tow has been passed through the bath is in the range of about 0.2 to about 1.4 percent by weight based upon the total weight of the tow and the dried coating.

31. The process of Claim 30 wherein the amount of the coating after spraying is about 2.0 to about 3.0 percent by weight and the amount of coating after passing through the bath is about 0.75 to about 1.4 percent by weight.

32. The process of Claim 18 wherein the uniform coating comprises about 0.2 to about 1.4 percent of the weight of the tow based upon the total weight of the tow and the dried, uniform coating.

33. The process of Claim 32 wherein the uniform coating comprises about 0.75 to about 1.4 percent by weight.
34. The process of Claims 18, 19 or 20 wherein the fibers are intermixed by employing a gas intermixing means.
35. The process of Claim 34 wherein the gas intermixing means has a gas impingement means which directs a generally perpendicular gas flow onto the fibers, thereby intermixing the fibers.
36. The process of Claim 20 wherein the fibers are spread by employing gas jets.
37. The process of Claim 20 wherein the reinforcing fibers and the thermoplastic fibers are brought into simultaneous contact on a rod or roll to intermix the fibers.
38. The process of Claims 37 wherein a second rod or roll is employed.
39. The process of Claims 18, 19 or 20 wherein after being collected, the tow is applied to a mold and heated to a temperature above the melting point of the thermoplastic fibers to form a composite molded article.
40. The process of Claims 18, 19 or 20 wherein after being collected, the tow is applied to a mold in the form of a woven fabric and heated to a temperature above the melting point of the thermoplastic fibers to form a composite molded article.
41. The process of Claim 39 wherein the tow is continuously applied to the mold employing a filament winding process.
42. The process of Claim 39 wherein the composite article is a recreational article.
43. The process of Claim 42 wherein the composite article is a tennis racquet frame.
44. The process of Claims 18, 19 or 20 wherein after being collected, the tow is braided into a three dimensional article.
45. The process of Claim 44 wherein the three dimensional article is heated at a temperature above the melting point of the thermoplastic article to form a composite molded article.

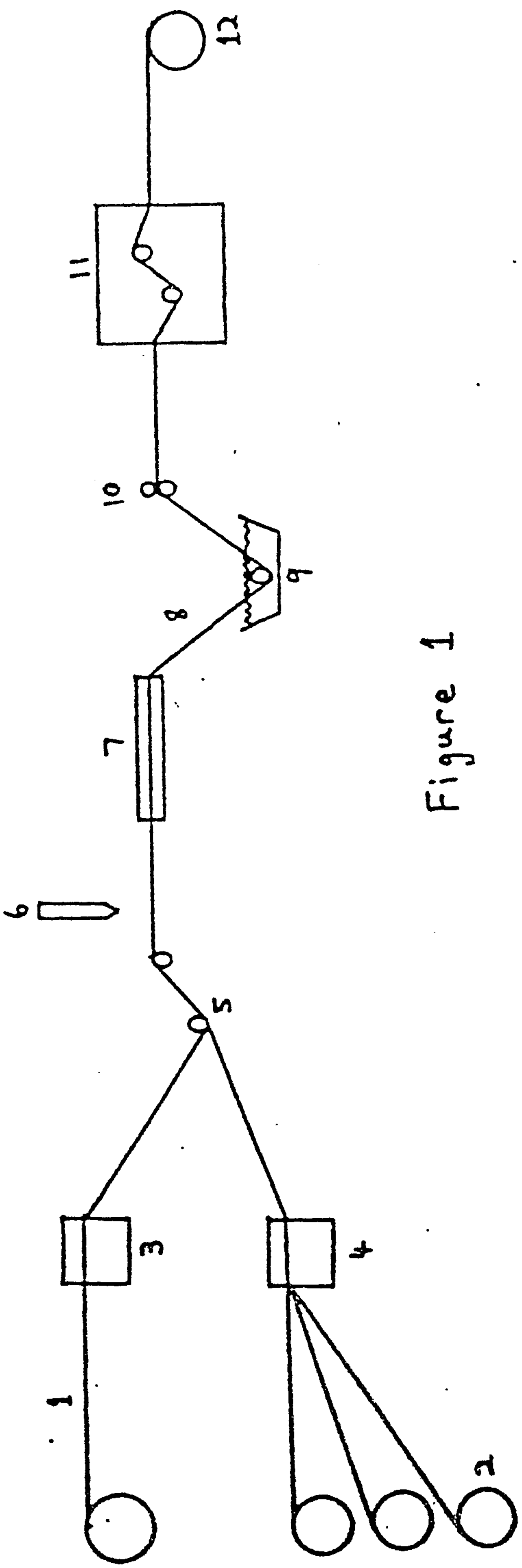


Figure 1

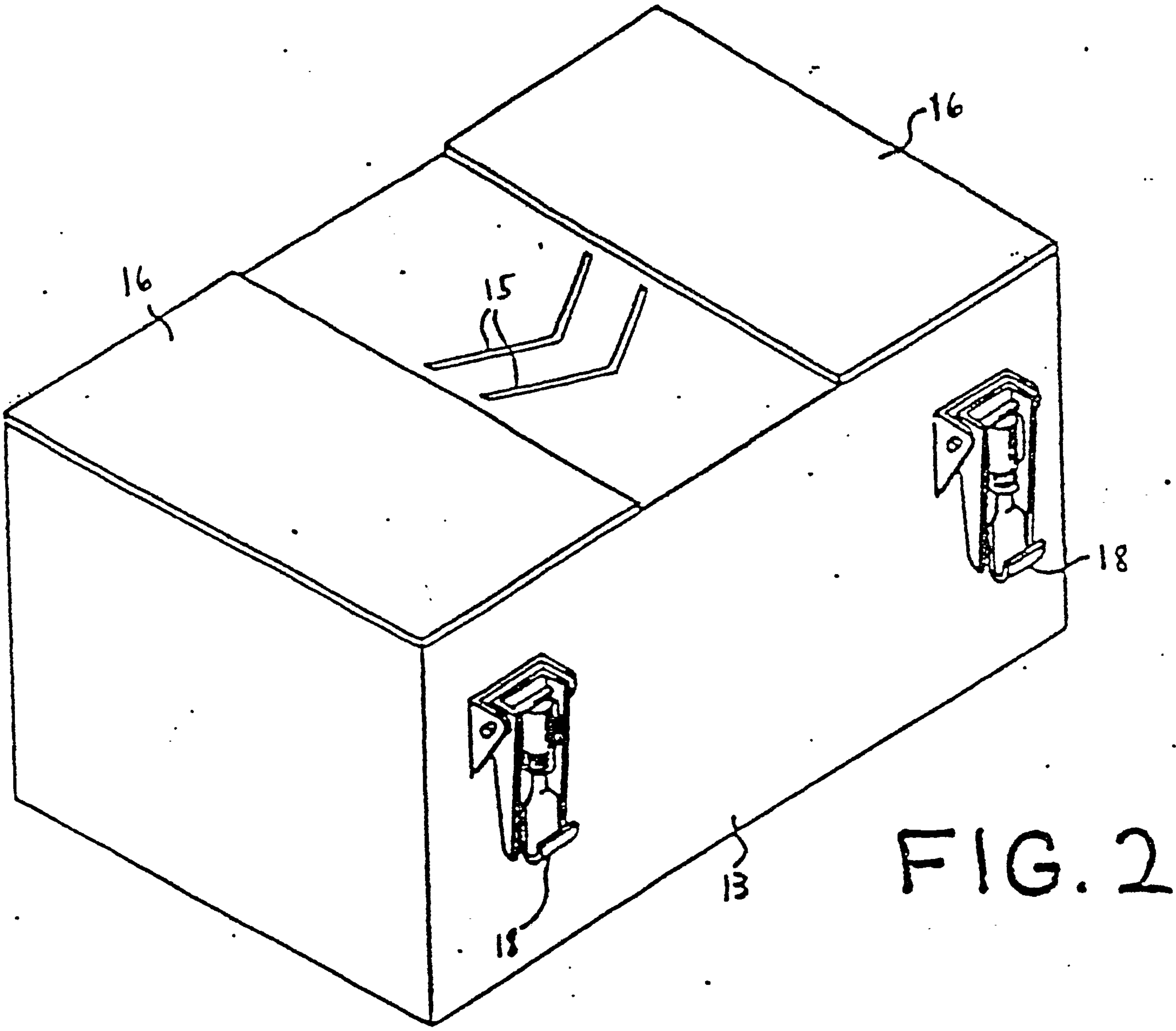


FIG. 2

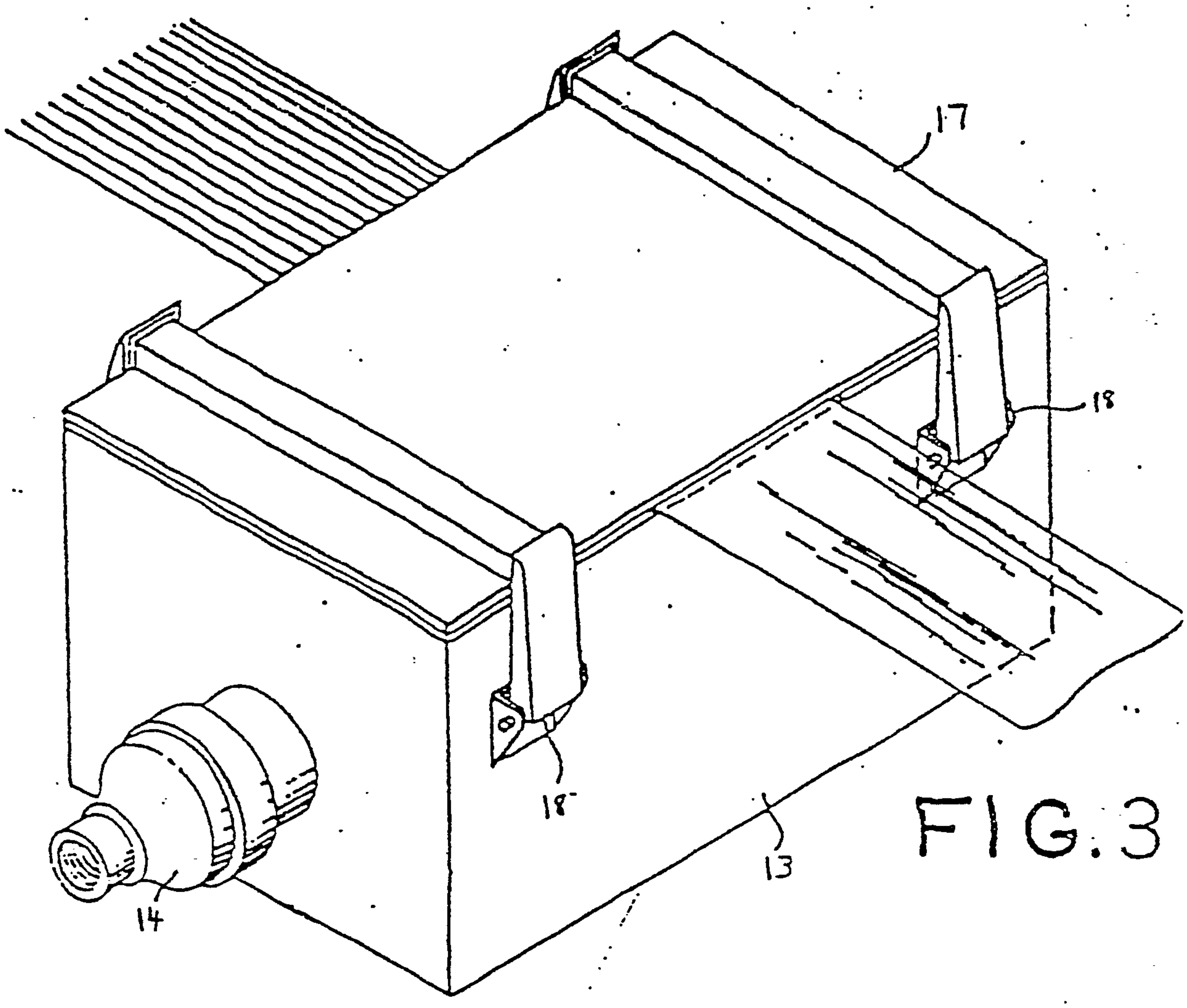


FIG.3